# EUROPEAN PATENT APPLICATION

(11) **EP 4 491 589 A1**
(43) Date of publication of application: **15.01.2025**
(21) Application number: 23185231.0
(22) Date of filing: 13.07.2023
(51) Int. Cl.: C02F 11/123, B01D 33/04, C02F 101/20

(54) **METHOD AND APPARATUS FOR PROCESSING SLURRY**

(71) Applicant: Umicore Finland OY, 67900 Kokkola (FI)
(72) Inventor: HASSINEN, Ville, 67900 Kokkola (FI); FRÄNTI, Arto, 67900 Kokkola (FI); MARJELUND, Janne, 67900 Kokkola (FI)
(74) Representative: Umicore RDI Patent Department

(57) **Abstract**

The method for processing a first slurry comprising first aqueous solution and at least one hydroxide, oxide ,oxyhydroxide or carbonate of one or more metal elements, said one or more metal elements including at least one of Ni, Co and Mn, comprises repeating steps of distributing the first slurry onto a filter cloth of a belt filter, filtering at least part of the first aqueous solution through the filter cloth to form a filter cake, passing washing liquid through the filter cake and the filter cloth to form a washed filter cake and discharging the washed filter cake from the filter cloth. The method further comprises repeating steps of re-slurrying at least a part of the discharged filter cake to a second slurry, distributing a first portion of the second slurry onto the filter cake and/or washed filter cake on the filter cloth.

## Description

### TECHNICAL FIELD

Generally, the present invention relates to a method for processing a slurry involving filtering. The invention further relates to an apparatus used in the method.

### BACKGROUND

In the chemical industry, intermediate products are often in a form of slurry comprising insoluble fine solid particles suspended in a liquid. These slurries are filtrated in a dewatering process to separate the solid particles from the liquid. The dewatering process is often realized by a belt filter having a moving endless filter cloth having a feed end onto which the slurry is distributed. The liquid of the slurry filtrates through the filter cloth permeable to the liquid, whereby a filter cake containing solid particles of the slurry is formed onto the filter cloth. The filter cake can then be washed in a washing phase by passing washing liquid through the filter cake, while the cake is resting on the moving filter cloth. The filtration of the liquids through the filter cloth is often enhanced by creating a partial vacuum on another side of the filter cloth than onto which the filter cake is formed. At the discharge end of the belt filter the filter cake is removed from the filter cloth and possibly conveyed to further processing phases outside the belt filter such as to an additional drying phase. An example of a belt filter used in the chemical industry is disclosed in EP 0517985 B1.

Relating on slurry processing a problem with the known belt filters is that the washing phase might be inadequate for removing enough impurities from the filter cake. Further, the filter cake resting on the filter cloth may crack during the filtration, rendering an unequal filtration result, and if this is mitigated, more vacuum during the filtration is required. Still further, the unequal filtration result might hamper cake removal from the filter cloth.

### SUMMARY OF THE INVENTION

An object of the invention is to provide a method and an apparatus for processing slurry, by which drawbacks related to the prior art can be reduced.

The object of the invention is achieved with a method and an apparatus which are characterized in what is disclosed in the independent claims. Some of the preferred embodiments of the invention are disclosed in the dependent claims.

The method according to the invention for processing a first slurry comprising a first aqueous solution and at least one hydroxide, oxide, oxyhydroxide or carbonate of one or more metal elements, said one or more metal elements including at least one of Ni, Co and Mn, comprises steps of:
a) distributing the first slurry onto a moving filter cloth of a belt filter;
b) filtering at least part of the first aqueous solution the first slurry through the filter cloth to form a filter cake onto the filter cloth;
c) passing washing liquid through the filter cake and the filter cloth to form a washed filter cake onto the filter cloth; and
d) discharging the washed filter cake from the filter cloth to form a discharged filter cake.
The method further comprises steps of:
e) re-slurrying at least a part of the discharged filter cake to form a second slurry; and
f) distributing a first portion of the second slurry onto the filter cake and/or washed filter cake on the filter cloth and repeating the steps a) to f).
In step e), i.e. the re-slurrying step, the discharged washed filter cake is contacted and mixed with a liquid, a second aqueous solution, whereby the discharged washed filter cake is converted to the form of second slurry which provides at least one further washing phase for the solids of the first slurry contained in the filter cake. This has the advantage that it is possible to reduce impurities from the solids further.

It is demonstrated hereinbelow that by processing according to the invention of a slurry comprising a solid component of nickel manganese cobalt hydroxide suitable to be used as a precursor in manufacturing of a cathode active material for batteries, that the sodium impurity level decreased over 30 % compared to the respective processing without the steps of e) and f). Furthermore, in step f) where the second slurry being distributed onto the filter cake and/or washed filter cake on the filter cloth provides an additional sealing for the cracking of the filter cake caused by the removal of moisture from the cake. This has the advantage that further liquid removal from the filter cake is enhanced and air exposure of the vacuum is reduced. The improved liquid removal facilitates easier discharging of the filter cake from the filter cloth and the reduced air exposure reduces carbon invasion to the filter cake.

A further advantage of the invention is, that it is possible to control the density of solids of the second slurry and keep it constant. This helps implement a possible subsequent drying step, e.g. spray drying of the second slurry, without disturbance.

A further advantage of the invention is, that it can be implemented in processing many kinds of metal containing slurries including the slurries comprising a solid component of nickel manganese cobalt hydroxide suitable to be used as a precursor in manufacturing a cathode active material for batteries.

Preferably, the belt filter is a horizontal belt filter, preferably providing a continuous vacuum on a horizontal plane having the moving filter cloth, and the first slurry is distributed onto the moving filter cloth and the first portion of the second slurry is distributed onto the filter cake and/or washed filter cake repeatedly or continuously.

In some embodiments of the method according to the invention step a), the distributing of the first slurry onto the filter cloth, is preceded by forming the first slurry by mixing a first powder comprising the at least one of hydroxide, oxide, oxyhydroxide or carbonate of the said one or more metal elements with a first aqueous solution.

In some embodiments of the method according to the invention, the re-slurrying comprises mixing the at least a part of the discharged filter cake with a second aqueous solution in a re-slurrying tank, which second aqueous solution is preferably water.

In some embodiments of the method according to the invention, the second aqueous solution comprises at least one additive.

For instance, when the particles of the second slurry have a sparse and/or amorphous structure, such as in Co(OH)₂, the additive can be an agglomerating agent for agglomerating the particles of the second slurry in the re-slurrying tank to ease the subsequent filtering and/or drying of the second slurry. Preferably, in such a case the agglomerating agent is a sugar such as dextrose and sorbitol or the like.

In some embodiments of the method according to the invention, the re-slurrying comprises:
- setting a target level for a density of solids of the second slurry;
- adjusting the density of solids of the second slurry towards the target level by controlling the amount of the second aqueous solution in the re-slurrying tank. Preferably, controlling the amount of the second aqueous solution in the re-slurrying tank comprises steps of;
- providing a flow of second aqueous solution to the re-slurrying tank with a solution dispenser;
- analyzing the density of solids of the second slurry the re-slurrying tank;
- increasing the flow of the second aqueous solution to the re-slurrying tank with the solution dispenser when the density of solids is above the target level; and
- decreasing the flow of the second aqueous solution to the re-slurrying tank with the solution dispenser when the density of solids is below the target level.

In some embodiments, the method according to the invention comprises a step of conducting a second portion of the second slurry to outside of the belt filter or back to the re-slurrying tank.

In some embodiments of the method according to the invention, the analyzing the density of solids of the second slurry comprises steps of measuring the density of solids of the first portion of the second slurry by first measuring means and/or by measuring the density of solids of the second portion of the second slurry by second measuring means. For instance, the first measuring means and/or the second measuring means can include a mass flow meter. With a mass flow meter, the specific weight of the second slurry can be measured, and from the specific weight of the slurry the density of solids can be calculated using known methods. Alternatively, the density of solids of the second slurry can be calculated, when the volume and mass of the first portion of the second slurry is first determined.

In some embodiments of the method according to the invention the distribution of the first portion of the second slurry onto the filter cake is configured to increase the cake thickness at least by 10 %, preferably at least 20 %, more preferably at least 30 %, and most preferably at least 40 %, compared to the respective processing without the steps of e) and f).

In some embodiments of the method according to the invention, washing liquid is passed through the filter cake and the filter cloth by at least one washing device, wherein the at least one washing device may be a through type, spray type, washing pool, and washing tray, for instance.

In some embodiments of the method according to the invention, the method comprises a step of creating a vacuum suction through the filter cloth of a belt filter for enhancing the flow of the first aqueous solution and washing liquid through the filter cloth. By creating a vacuum suction it is meant that a suction pressure, i.e. a partial vacuum, is generated from an opposite side of the filter cloth whereon the filter cake is formed.

In some embodiments of the method according to the invention, the first slurry has a median particle size D50 between 0.7 µm and 20 µm, preferably between 2 µm and 18 µm, more preferably between 3 µm and 15 µm. The particle size distribution (PSD) of the slurry can be measured using PSD method utilizing laser diffraction.

In some embodiments of the method according to the invention the one or more metal elements in the hydroxide, oxide, oxyhydroxide or carbonate include:
- Ni in a content x, wherein 0 ≤ x ≤ 100.0 mol%,
- Co in a content y, wherein 0 ≤ y ≤ 100.0 mol%, and
- Mn in a content z, wherein 0 ≤ z ≤ 100.0 mol%,
- Al in a content q, wherein 0 ≤ q ≤ 10.0 mol%, and
- one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein 0 ≤ r ≤ 5.0 mol%, and
wherein x, y, z, q and r are contents expressed as mol% relative to the total molar content of the one or more elements in the hydroxide, oxide, oxyhydroxide or carbonate, and wherein x+y+z+q+r = 100 mol%, wherein the values x,y,z,q,r are measured by Inductively Coupled Plasma (ICP) method.

Some embodiments of the method according to the invention comprise a step of drying at least a part of the second portion of the second slurry, preferably by a dryer such as a spray dryer, to obtain second powder.

An apparatus according to the invention for processing first slurry comprises a belt filter having:
- a feed end and a discharge end;
- a liquid permeable endless filter cloth configured to move between a feed end and a discharge end;
- first feeding means configured to distribute the first slurry onto the filter cloth at the feed end to form a filter cake onto the filter cloth;
- at least one washing device between the first feeding means and the discharge end configured to pass washing liquid through the filter cake and the filter cloth to form a washed filter cake onto the filter cloth; and
said discharge end is configured to discharge the washed filter cake from the filter cloth to form a discharged filter cake. The apparatus further comprises:
- a re-slurrying tank configured to receive at least part of the discharged filter cake and to form a second slurry;
- a second feeding means configured to distribute a first portion of the second slurry onto the filter cake and/or washed filter cake on the filter cloth; and
- a first pipeline for conducting the first portion of the second slurry from the re-slurrying tank to the second feeding means.

Preferably the apparatus further comprises a second pipeline for conducting a second portion of the second slurry from the re-slurrying tank to outside of the belt filter. The belt filter may be a horizontal belt filter comprising means for creating a vacuum suction, i.e. vacuum pressure or partial vacuum, from an opposite side of the filter cloth whereon the filter cake is formed.

### BRIEF DESCRIPTION OF THE FIGURES

By means of further guidance, figures are included to better appreciate the teaching of the present invention, wherein:
Fig. 1 depicts an embodiment of an apparatus according to the invention for processing a first slurry in a schematic view;
Fig. 2 depicts an embodiment of the method according to the invention as a flow chart; and
Figs. 3 and 4 relate to the experiment conducted, wherein Fig. 3 shows the sodium concentration of the samples taken from the filter cake at the discharge end of the belt filter and Fig. 4 shows the sodium concentration of the samples taken from the re-slurrying tank, respectively. The diamond symbol ◆ refers to samples obtained with the method according to the present invention, including steps of slurry recycle. The square symbol □ refers to reference samples obtained with the respective method without slurry recycle, e.g. without steps e) and f) in Fig. 3 and without step f) in Fig. 4.

### DETAILED DESCRIPTION OF THE INVENTION

In the following detailed description, preferred embodiments are described in detail to enable practice of the invention. Although the invention is described with reference to these specific preferred embodiments, it will be understood that the invention is not limited to these preferred embodiments. To the contrary, the invention includes numerous alternatives, modifications and equivalents as will become apparent from consideration of the following detailed description and accompanying drawings.

The term "comprising", as used herein and in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a composition comprising components A and B" should not be limited to compositions consisting only of components A and B. It means that with respect to the present invention, the only relevant components of the composition are A and B. Accordingly, the terms "comprising" and "including" encompass the more restrictive terms "consisting essentially of" and "consisting of".

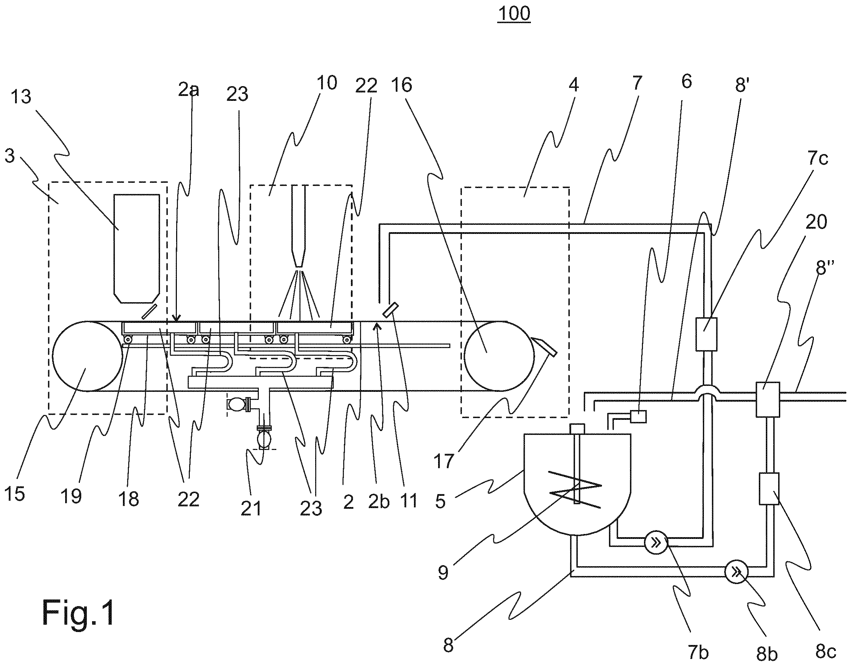

In fig. 1 an example of an apparatus 100 according to the invention is shown. The apparatus includes a belt filter comprising a feed end 3 for receiving and processing a slurry and a discharge end 4 for discharging the processed slurry. An endless filter cloth 2 having an outer surface 2a and an inner surface 2b moves/travels between the feed end 3 and the discharge end 4. The filter cloth 2 is made of liquid permeable filter material. In the feed 3 end there is a first roller 15 and in the discharge end 4 there is a second roller 16 about which the filter cloth 2 rotates. One of the first 15 or the second roller 16 is connected to a motor (not shown) for rotating the roller and moving/traveling the filter cloth 2. Preferably the belt filter is a horizontal belt filter.

The feed end 3 comprises first feeding means 13 configured to distribute the first slurry comprising insoluble fine solid particles in a solution to an even layer on the outer surface 2a of the filter cloth 2 to form a filter cake onto the filter cloth 2. The formed filter cake is washed during the cake rests on the filter cloth 2 to remove/reduce impurities therein. Downstream of the first feeding means 13 there is at least one washing device 10 configured to pass washing liquid through the filter cake and the filter cloth 2 to form a washed filter cake onto the filter cloth 2.

Below the filter cloth 2 facing the inner surface 2b of the filter cloth 2 there is at least one vacuum tray 18, which is configured to move along rails 19 between the feed end 3 and the discharge end 4 of the belt filter. The at least one vacuum tray 18 is connected to vacuum generation means 21 via pressure pipes 23 for generating a vacuum pressure, i.e. a partial vacuum inside the vacuum tray 18, below the filter cloth 2. The partial vacuum generated in a so-called vacuum phase makes the open upper side of the vacuum tray 18 to attach to the inner surface 2b of the filter cloth 2 by suction force and to move along with the moving filter cloth 2. The partial vacuum inside the vacuum tray 18 creates a vacuum suction, i.e. a suction force through the filter cloth 2, which enhances the filtration of the first aqueous solution and/or washing liquid through the filter cloth 2 leaving the solid particles on the outer surface 2a of the filter cloth 2 in the form of washed filter cake.

In the figure, the vacuum tray 18 is divided into three compartments 22 and each compartment 22 is connected to the vacuum generation means 21 with at least one pressure pipe 23. The vacuum pressure or partial vacuum inside each compartment 22 can be adjusted independently, which makes possible to optimize the operation of the belt filter, for example, by keeping some compartments closed. The filtered first aqueous solution and/or washing liquid entering the compartments 22 is directed to a filtrate tank (not shown) for further processing. The belt filter may comprise separate filtrate tanks for each compartment 22.

When the vacuum tray 18 enters to the discharge end 4 of the belt filter, the partial vacuum inside the vacuum tray 18 is removed by closing the connection to the vacuum generation means 21 and allowing gas to flow inside the vacuum tray 18. As the vacuum suction force stops, the suctions tray 18 loosens from the inner side 2b of the filter cloth 2 and the vacuum tray 18 is moved back to the feed end 3 of the belt filter in a so-called return phase. When the belt filter is in operation the vacuum phases and return phases are continuously repeated.

The washed filter cake dries during the suction phase and the washed and the dried cake is removed from the filter cloth 2 at the discharge end 4 of the belt filter. The discharge end 4 has a cake discharge device 17 for removing the washed filter cake from the outer surface 2a of the filter cloth 2 to form a discharged filter cake. The cake discharge device 17 can be a scraper-type or wire-type device, for instance. The basic structure and operation of the belt filter explained above is well known in the art.

The apparatus 100 according to the invention further comprises a re-slurrying tank 5 configured to receive at least part discharged filter cake removed from the filter cloth 2 at the discharge end 4 of the belt filter. In the re-slurrying tank 5 the received discharged filter cake is mixed with liquid, preferably with a second aqueous solution, to form a second slurry.

Further, the apparatus 100 according to the invention comprises second feeding means 11 for distributing a first portion of the second slurry prepared in the re-slurrying tank 5 onto the filter cake and/or onto the washed filter cake lying on the filter cloth 2. Preferably, the second feeding means 11 locate between at least one washing device 10 and the discharge end 4 of the belt filter. The re-entered first portion of the second slurry goes through the washing phase again, whereby the impurities in therein are further reduced.

The upper surface of the filter cake/washed filter cake may contain cracks or voids caused by the removal of moisture from the cake. These cracks and voids are sealed by the distributed layer of the second slurry, which makes possible to maintain the suction pressure and partial vacuum with a lower energy consumption of the vacuum generation means 21. This results in enhanced liquid removal from the filter cake and a smaller moisture content for the discharged filter cake. The second feeding means 11 and the re-slurrying tank 5 are connected together with a first pipeline 7 for conducting a first portion of the second slurry from the re-slurrying tank 5 to the second feeding means 11. The first pipeline 7 is provided with a first pump 7b for pumping the slurry flowing in the first pipeline 7.

When the second feeding means 11 locate between the at least one washing device 10 and the discharge end 4 of the belt filter, it enables, when the apparatus is in operation, to achieve a good discharge result as the moisture content of the cake during the discharging it, is obtained to reduced further and/or to homogenized over the width of the filter cloth due to the aforementioned cracks and voids sealing.

The second portion of the second slurry, which is not returned onto the filter cloth 2, is conducted outside re-slurrying tank 5 through a second pipeline 8, which has a first end connected to the re-slurrying tank 5. The second pipeline 8 is provided with a second pump 8b for pumping the slurry flowing in the second pipeline 8. At a second end of the second pipeline 8 there are valve means 20 connected to a return pipe 8' and a discharge pipe 8". By operating the valve means 20 the second slurry flowing in the second pipeline 8 can be directed back to the re-slurrying tank 5 via return pipe 8' or out the apparatus 100 via the discharge pipe 8".

For re-slurrying the discharged filter cake the apparatus comprises a solution dispenser 6 for supplying liquid such as water to the re-slurrying tank 5 and the re-slurrying tank 5 comprises mixing means 9 for mixing the liquid and the discharged filter cake. The solution dispenser 6 is connected via a piping to a liquid source not shown in the figure.

The solution dispenser 6 is configured to adjust the density of solids of the slurry in the re-slurrying tank 5 by controlling the amount of liquid added in the re-slurrying tank 5. The term density of solids means here the solids density of the slurry, which is expressed in units kg/m³ or kg/dm³. For measuring the density of solids of the second slurry the apparatus 100 has first measuring means 7c configured to measure the density of solids of the second slurry flowing in the first pipeline 7 and second measuring means 8c configured to measure the density of solids of the second slurry flowing in the second pipeline 8. The first and second measuring means are installed to the first 7 and second pipelines 8 and they are provided with transfer means for transferring the measured densities to the solution dispenser 6 and to the valve means 20. The valve means 20 can be configured to direct the second slurry flowing in the second pipeline to the discharge pipe 8", when the measured density of solids of the second slurry has been regulated to a predetermined acceptable range. Preferably the density of solids of the second slurry directed to the discharge pipe is 1300 kg/m³-2100 kg/m³.

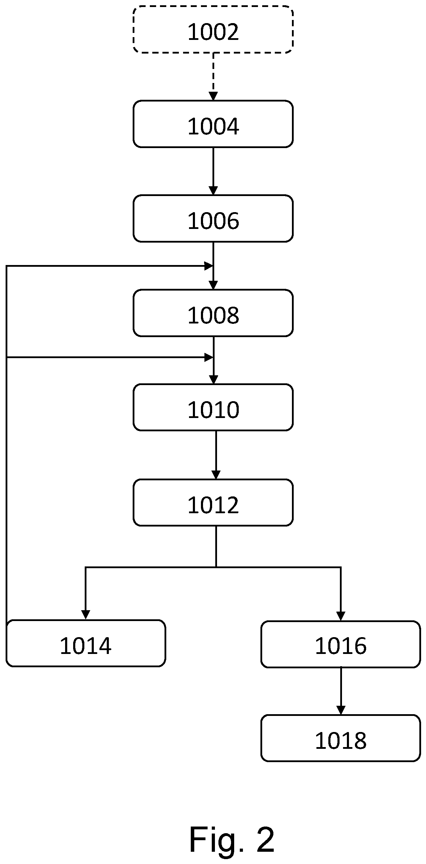

In fig. 2 an example of an embodiment of the method according to the invention is shown as a flow chart.

At the beginning of the method an optional step 1002 may be executed. At the step 1002, a first slurry is formed by mixing a first powder with a first aqueous solution. The first powder comprises at least one of hydroxide, oxide, or oxyhydroxide or alternatively a carbonate of one or more metal elements, which metal elements include at least one of Ni, Co and Mn.

Preferably the median particle size D50 of the slurry is between 0.7 µm and 20 µm, preferably between 2 µm and 18 µm, more preferably between 3 µm and 15 µm. The particle size distribution (PSD) of the slurry can be measured using PSD method utilizing laser diffraction.

Preferably, the one or more metal elements in the hydroxide, oxide, oxyhydroxide or carbonate include:
- Ni in a content x, wherein 0 ≤ x ≤ 100.0 mol%, for example 5.0 mol% ≤ x%, preferably x ≥ 60.0 mol%, more preferably x ≥ 80.0 mol%;
- Co in a content y, wherein 0 ≤ y ≤ 100.0 mol%, for example 0 ≤ y ≤ 30.0 mol%,
- Mn in a content z, wherein 0 ≤ z ≤ 100.0 mol%, for example, 0 ≤ z ≤ 85.0 mol%,
- Al in a content q, wherein 0 ≤ q ≤ 10.0 mol%, and
- one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein 0 ≤ r ≤ 5.0 mol%, and
wherein x, y, z, q and r are contents expressed as mol% relative to the total molar content of the one or more elements in the hydroxide, oxide, oxyhydroxide or carbonate and wherein x+y+z+q+r = 100 mol%, wherein the values x,y,z,q,r are measured by Inductively Coupled Plasma (ICP) method. In a preferred embodiment, 75.0 ≤ x ≤ 85.0 mol%, 5.0 ≤ z ≤ 15.0 mol%, 5.0 ≤ y ≤ 15.0 mol%. In a preferred embodiment, 55.0 ≤ x ≤ 65.0 mol%, 15.0 ≤ z ≤ 25.0 mol%, 15.0 ≤ y ≤ 25.0 mol%. In a preferred embodiment, 45.0 ≤ x ≤ 55.0 mol%, 25.0 ≤ z ≤ 35.0 mol%, 15.0 ≤ y ≤ 25.0 mol%. In a preferred embodiment, 30.0 ≤ x ≤ 35.0 mol%, 30.0 ≤ z ≤ 35.0 mol%, 30.0 ≤ y ≤ 35.0 mol%. In a preferred embodiment, 0 ≤ y ≤ 5.0 mol%, for example y=0, and x ≤ 99.0 mol%, for example 85.0 mol% ≤ x ≤ 99.0 mol%. In a preferred embodiment x ≤ 95.0 mol% and y ≥ 5.0 mol%. In a preferred embodiment 20.0 mol% ≤ x ≤ 25.0 mol% and 1.0 mol% ≤ y ≤ 3.0 mol%; more preferably also 70.0 mol% ≤ z ≤ 80.0 mol%.

Sometimes the first slurry can be a readily available product, such as an intermediate product produced in a chemical process, processed in the method according to the invention. In that case the optional step 1002 can be skipped and the first slurry is an initial starting material used in the method.

At step 1004, the first slurry is distributed onto a moving filter cloth 2 of the belt filter by first feeding means 13 and, at step 1006, a filter cake is formed from the distributed first slurry. Advantageously, the first slurry is distributed onto the filter cloth 2 as an even, substantially constant-thickness layer. The thickness of layer may be 1-10 mm, preferably 2-6-mm, more preferably 4-6 mm. Preferably, first slurry is distributed onto the moving filter cloth 2 continuously.

Suitable filter cloth 2 is chosen based on the filtration characteristics of the filter cloth 2 and on particle size of the solids in the first slurry using common general knowledge of a skilled person. The dimensions of the openings in the filter cloth 2, i.e. the sieve size, through which the first aqueous solution flows, is preferably 0.5 µm, 1 µm, 2 µm, 3 µm, 5 µm or 10 µm depending on the particle size characteristics of the first slurry.

When the layer of the first slurry rests on filter cloth 2 at least part of the first aqueous solution of the first slurry flows through the filter cloth 2, whereby the solid particles of the slurry form a filter cake onto the filter cloth 2. Preferably, for enhancing filtration of the first aqueous solution through the filter cloth 2 a vacuum suction is created through the filter cloth 2 of the belt filter by creating a partial vacuum inside the vacuum tray 18 with vacuum generation means 21. The magnitude of the partial vacuum and the moving speed of the filter cloth 2 is determined and adjusted to achieve acceptable filtration result. Preferably the partial vacuum is 0,3-0,7 bar, and the moving speed of the filter cloth is 0.5-6.0 cm/s.

Next, at a step 1008, the filter cake resting on the filter cloth 2 is washed by passing washing liquid through the filter cake and the filter cloth 2 to form a washed filter cake onto the filter cloth 2. The washing liquid is passed through the filter cake and the filter cloth 2 by at least one washing device 10, which is configured to distribute the washing liquid to the filter cake resting on the filter cloth 2. The washing device may be a through type, spray type or washing tray type device, for instance. Washing liquid can be aqueous solution, such as water, preferably deionized water, and may comprise additional components. Typically, the additional component is sodium hydroxide (NaOH) when caustic washing treatment is provided to the filter cake.

At a step 1010, after obtaining the washed filter cake, the washed filter cake is discharged from the filter cloth 2 to form a discharged filter cake. For that purpose the discharge end 4 of the belt filter has a cake discharge device 17 for removing the washed filter cake from the outer surface 2a of the filter cloth 2. The cake discharge device 17 can be a scraper type or wire type device, for instance. A portion or preferably all of the discharged filter cake can be conducted outside of the belt filter to following processing phases.

At a step 1012, at least a part of the discharged filter cake is directed to a re-slurrying tank 5 for re-slurrying the discharged filter cake to form a second slurry. The re-slurrying is conducted by mixing the at least a part of the discharged filter cake with a second aqueous solution in the re-slurrying tank 5. Preferably, the second aqueous solution is water. Preferably, the temperature of the second aqueous solution is equal or more than 60 ⁰C. It has been found that the impurities are removed better from the filter cake during washing if the temperature of slurry is high enough. Therefore, the temperature of the second slurry in the re-slurrying tank is advantageously adjusted to at least 40 ⁰C, preferably at least 50 ⁰C and the most preferably at least 55 ⁰C.

Optionally, the second aqueous solution may comprise at least one additive added to the second slurry in the re-slurrying tank 5. For instance, when the particles of the second slurry have a sparse and/or amorphous structure, the additive can be an agglomerating agent for agglomerating the particles of the second slurry in the re-slurrying tank 5 to ease the subsequent filtering and/or drying of the second slurry. Preferably, in such a case the agglomerating agent is a sugar such as dextrose and sorbitol or the like.

At a step 1014, a first portion of the second slurry is distributed back the filter cloth 2 onto the formed filter cake from the re-slurrying tank 5. Alternatively or additionally, the first part of the second slurry can be distributed onto the washed filter cake on the filter cloth 2. Distribution of the second slurry is realized by conducting the first part of the second slurry via a first pipeline 7 to the second feeding means 11, which distribute the second slurry onto the filter cake and/or washed filter cake. Preferably, the first portion of the second slurry is distributed onto the filter cake and/or washed filter cake resting on the moving filter cloth 2 continuously.

In some embodiments, the first part of the second slurry is distributed only onto the washed filter cake on the filter cloth 2, preferably directly after the step 1008, to ensure an enhanced liquid removal from the filter cake during filtering between the steps 1008 and 1010 and good removal of the filter cake during the step 1010.

The primary purpose of the distribution of the second slurry is to fill in possible voids, splits and/or cracks on the upper surface of the filter cake and/or washed filter cake. These voids, splits and/or cracks can develop when the filter cake is formed by filtering at least part of the first aqueous solution of the first slurry through the filter cloth 2 if the surface of the filter cake dries faster that the lower part of the cake. Also washing and filtering the washing liquid from the filter cake may deform the surface of the cake. Surface deformations on the filter cake may cause uneven filtration of the first aqueous solution and/or washing liquid especially when the partial vacuum below the filter cloth is high.

Because of sealing the cracks and voids of the upper surface of the filter cake by distributing the second slurry on top of the filter cake during the step 1014 the partial vacuum below the filter cake and the filter cloth 2 is easier to sustain and control. This results in enhanced liquid removal from and reduced air exposure of the filter cake. Additionally, when the discharged filter cake has smaller moisture content, discharging the filter cake from the filter cloth 2 during 1010 is easier.

Preferably, the amount of the distributed first portion of the second slurry is determined such that the distributed layer of the first portion of the second slurry increases the cake thickness at least by 10 %, preferably at least 20 %, more preferably at least 30 %, and most preferably at least 40 %. In some applications, the thickness of the distributed layer of the first portion of the second slurry can be even as high as the thickness of the filter cake or washed filter cake.

Only a first portion of the second slurry is redistributed on the filter cloth 2 during the step 1014. A second portion of the second slurry is conducted to outside of the apparatus 100 or circulated back to the re-slurrying tank 5 at a step 1016. Advantageously, if the density of solids of solids of the second slurry has not reached the predetermined level the second part of the second slurry is directed back to the re-slurrying tank 5.

The part of the second portion, which is conducted outside of the apparatus 100 can be dried to obtain a second powder at a step 1018. Preferably, the drying is realized using a spray dryer. The achieved second powder has gone through a filtration phase, where at least a part of the first aqueous solution is removed and a washing phase, in which impurities of the filter cake are decreased. Thus, the impurity levels of the second slurry and hence the second powder are lower than the impurity levels in the first slurry and first powder.

In an embodiment of the method according to the invention, the second slurry is formed by mixing the at least a part of the discharged filter cake with a second aqueous solution in a re-slurrying tank 5. Treating of the second slurry comprises steps of setting a target level for a density of solids of the second slurry and adjusting the density of solids of the second slurry towards the target level by controlling the amount of the second aqueous solution in the re-slurrying tank 5.

Different products and materials have different physical characteristics, which affect to the pumpability of the slurry. If the density of solids of the slurry is too high, it does not stay fluent enough for pumping and it may jam into pipes and valves. On the other hand, drying the slurry to a final product by evaporation requires more energy the higher the moisture content of the slurry is. Sometimes it may be necessary to use the dryer with a predetermined power consumption for example because of associated processes, such as heat recovery processes. In these cases, the drying process can be adjusted by controlling the density of solids, i.e. the liquid content of the slurry entering the drying step. Further, a certain range for the density of solids may be necessary or beneficial, if the properties of the final product, such as agglomeration, are modified during subsequent drying. Thus, controlling the amount of second aqueous solution in the re-slurrying tank 5 is advantageous both for minimizing the energy consumption of the following drying process and for ensuring smooth operation of the process.

In an embodiment of the method, controlling the amount of the second aqueous solution in the re-slurrying tank 5 is implemented by providing a flow of second aqueous solution to the re-slurrying tank 5 by a solution dispenser 6 based on the analysis result of the density of solids of the second slurry. When the density of solids of the second slurry is above the target level, the flow of the second aqueous solution to the re-slurrying tank 5 is increased by operating the solution dispenser 6. Correspondingly, when the density of solids of the second slurry is below the target level the flow of the second aqueous solution to the re-slurrying tank is decreased by operating the solution dispenser 6. Analyzing the density of solids of the second slurry is done by measuring the density of solids of the second portion of the second slurry by second measuring means 8c, which are configured to measure the density of solids of the second slurry flowing in the second pipeline 8. The valve means 20 are configured to direct the slurry flowing in the second pipeline to the discharge pipe 8", when the measured density of solids of the slurry is within predetermined acceptable range. When the measured density of solids of the slurry is not within the acceptable range, the valve means 20 direct the second slurry back to the mixing tank via the return pipe 8'.

Some preferred embodiments of the method and apparatus according to the invention has been disclosed above. The invention is not limited to the embodiments explained above, but the invention can be applied in different ways within the limits set by the patent claims.

### Example

In an experiment, a feed slurry was an aqueous slurry having a hydroxide component of 90 mol% nickel, 5 mol% manganese and 5 mol% cobalt, and D50 size of 5.4 µm. The feed slurry was filtrated with a horizontal belt filter having the width of 0.575 m and the length of 5.6 m. The filter cloth type of the belt filter was multifilament and the cake discharge device for removing the washed filter cake was a wire-type device. Throughout the experiment the moving speed of the filter cloth was 1 cm/s and the vacuum rate of the filtrating was -0.3 bar.

In the experiment the feed slurry was pumped directly to the feed end of the belt filter with the rate of 350 L/h and after the cake formation the filter cake was washed with 65 °C DI-water in one washing step with the wash rate of 100 L/h (0.86 m3/t). The discharged cake was re-slurried in the re-slurrying tank having a volume of 1.5 m3 by mixing it with 60 °C DI-water. Sampling began after the filter reached the steady state, after 30 minutes from the start.

Two sample sets were taken, one from the filter cake at the discharge end and another from the slurry inside the re-slurrying tank. First samplings of the sample sets were taken without distributing the slurry from the re-slurrying tank during 30 minutes of filtrating to get reference samples. Then, the slurry recycling was started by conducting the slurry from the re-slurring tank on top of the washed filter cake with a rate of 400 L/h when the filter cake thickness increased from 4 mm to 5 mm (25 %), and four sample sets were taken during 50 minutes of filtrating.

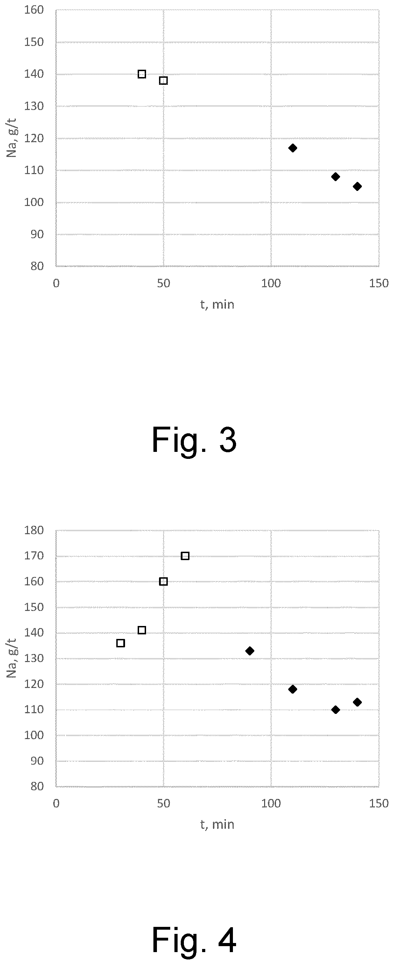

Sodium (Na) concentration of the samples were analyzed. Fig. 3 shows the sodium concentration (in a unit of g/t) of the samples taken from the filter cake at the discharge end Fig. 4 shows the respective sodium concentration of the sample taken from the re-slurrying tank. The diamond symbol◆ refers to samples obtained with the method according to the present invention, including steps of slurry recycle. The square symbol □ refers to reference samples obtained with the respective method without slurry recycle, e.g. without steps e) and f) in Fig. 3 and without step f) in Fig. 4.

Fig. 3 shows that the sodium concentration of the filter cake decreased 24 % when comparing the average of two reference data points with the last slurry recycle data point of the figure. Fig. 4 shows that the sodium concentration in the re-slurruing tank began to decrease after the slurry recycling on top of the washed filter cake was started; the sodium concentration decreased from 170 g/t to 113 g/t (34 %) in 80 minutes.

## Claims

1. A method for processing a first slurry comprising first aqueous solution and at least one hydroxide, oxide, oxyhydroxide or carbonate of one or more metal elements, said one or more metal elements including at least one of Ni, Co and Mn, the method comprising the steps of:
a) distributing the first slurry onto a moving filter cloth (2) of a belt filter (100),
b) filtering at least part of the first aqueous solution the first slurry through the filter cloth (2) to form a filter cake onto the filter cloth;
c) passing washing liquid through the filter cake and the filter cloth (2) to form a washed filter cake onto the filter cloth (2); and
d) discharging the washed filter cake from the filter cloth (2) to form a discharged filter cake,
**characterized in that** the method further comprises steps of:
e) re-slurrying at least a part of the discharged filter cake to form a second slurry;
f) distributing a first portion of the second slurry onto the filter cake and/or washed filter cake on the filter cloth (2); and
g) repeating steps a) to f).

2. The method according to claim 1, wherein the distributing the first slurry onto the filter cloth (2) is preceded by forming the first slurry by mixing a first powder comprising the at least one of hydroxide, oxide or oxyhydroxide or carbonate of the said one or more metal elements with the first aqueous solution.

3. The method according to claim 1 or 2, wherein the re-slurrying comprises mixing the at least a part of the discharged filter cake with a second aqueous solution in a re-slurrying tank (5), which second aqueous solution is preferably water.

4. The method according to claim 3, wherein the second aqueous solution comprises at least one additive for forming a cladding to the particles of the second slurry in the re-slurrying tank (5).

5. The method according to any of claim 3 or 4, wherein the re-slurrying comprises
a) setting a target level for a density of solids of the second slurry,
b) adjusting the density of solids of the second slurry towards the target level by controlling the amount of the second aqueous solution in the re-slurrying tank (5).

6. The method according to claim 5, wherein controlling the amount of the second aqueous solution in the re-slurrying tank (5) comprises steps of,
a) providing a flow of second aqueous solution to the re-slurrying tank (5) with a solution dispenser (6),
b) analyzing the density of solids of the second slurry the re-slurrying tank (5),
c) increasing the flow of the second aqueous solution to the re-slurrying tank (5) with the solution dispenser (6) when the density of solids is above the target level and
d) decreasing the flow of the second aqueous solution to the re-slurrying tank (5) with the solution dispenser (6) when the density of solids is below the target level.

7. The method according to any of the preceding claims comprising a step of conducting a second portion of the second slurry to outside of the belt filter or back to the re-slurrying tank (5).

8. The method according to claim 7, wherein analyzing the density of solids of the second slurry comprises steps of measuring the density of solids of the first portion of the second slurry by first measuring means (7c) and/or by measuring the density of solids of the second portion of the second slurry by second measuring means (8c).

9. The method according to any of the preceding claims, wherein the distribution of the first portion of the second slurry onto the filter cake is configured to increase the cake thickness at least by 10 %, preferably at least 20 %, more preferably at least 30 %, and most preferably at least 40 %.

10. The method according to any of the preceding claims, wherein the washing liquid is passed through the filter cake and the filter cloth (2) by at least one washing device (10), wherein the at least one washing device (10) is one of a through type, spray type or washing tray.

11. The method according to any of the preceding claims, comprising a step of creating an vacuum suction through the filter cloth (2) of a belt filter for enhancing the flow of first aqueous solution and washing liquid through the filter cloth (2).

12. The method according to any of the preceding claims, wherein the hydroxide, oxide or oxyhydroxide or carbonate of the one or more metal elements has a median particle size D50 between 0.7 µm and 20 µm, preferably between 2 µm and 18 µm, more preferably between 3 µm and 15 µm.

13. The method according to any of the preceding claims, wherein the one or more elements in the hydroxide, oxide, oxyhydroxide or carbonate include:
- Ni in a content x, wherein 0 ≤ x ≤ 100 mol%,
- Co in a content y, wherein 0 ≤ y ≤ 100.0 mol%, and
- Mn in a content z, wherein 0 ≤ z ≤ 100.0 mol%,
- Al in a content q, wherein 0 ≤ q ≤ 10.0 mol%, and
- one or more additional elements in a content r, wherein the additional elements are elements from the list of B, Ba, Ca, Ce, Cr, Fe, La, Mg, Mo, Nb, Si, Sr, Ti, Y, V, W, Zn, Na, S and Zr, wherein 0 ≤ r ≤ 5.0 mol%, and
wherein x, y, z, q and r are contents expressed as mol% relative to the total molar content of the one or more elements in the hydroxide, oxide, oxyhydroxide or carbonate, and wherein x+y+z+q+r = 100 mol%, wherein the values x,y,z,q,r are measured by Inductively Coupled Plasma (ICP) method.

14. The method according to any of the claims 7 to 13 , comprising a step of drying at least a part of the second portion of the second slurry by a dryer to obtain second powder.

15. An apparatus for processing first slurry, comprising a belt filter (100) having
- a feed end (3) and a discharge end (4);
- a liquid permeable endless filter cloth (2) configured to move between a feed end (3) and a discharge end (4);
- first feeding means (13) configured to distribute the first slurry onto the filter cloth (2) at the feed end (3) to form a filter cake onto the filter cloth (2); and
- at least one washing device (10) between the first feeding means (13) and the discharge end (4) configured to pass washing liquid through the filter cake and the filter cloth (2) to form a washed filter cake onto the filter cloth (2);
wherein said discharge end (4) is configured to discharge the washed filter cake from the filter cloth (2) to form a discharged filter cake,
**characterized in that** the apparatus further comprises:
- a re-slurrying tank (5) configured to receive at least part of the discharged filter cake and to form a second slurry;
- second feeding means (11) configured to distribute a first portion of the second slurry onto the filter cake and/or washed filter cake on the filter cloth (2); and
- a first pipeline (7) for conducting the first portion of the second slurry from the re-slurrying tank (5) to the second feeding means (11).

16. The apparatus according to claim 15, further comprising a second pipeline (8) for conducting a second portion of the second slurry from the re-slurrying tank (5) to outside of the apparatus.
